# EUROPÄISCHE PATENTSCHRIFT

(11) **EP 2 063 631 B1**
(45) Veröffentlichungstag und Bekanntmachung des Hinweises auf die Patenterteilung: **16.04.2014**
(21) Anmeldenummer: 08016847.9
(22) Anmeldetag: 25.09.2008
(51) Int. Cl.: H04N 5/33, H04N 5/232

(54) **Infrarotkamera**
Infrared camera
Caméra infrarouge

(30) Priorität: 20.11.2007 DE 102007055558; 29.11.2007 DE 102007057874
(43) Veröffentlichungstag der Anmeldung: 27.05.2009
(73) Patentinhaber: Optris GmbH, 13127 Berlin (DE)
(72) Erfinder: Kienitz, Ulrich, Dr., 10407 Berlin (DE)
(74) Vertreter: Ullrich & Naumann

(56) Entgegenhaltungen:
- EP-A2- 1 814 313
- US-B1- 6 886 104
- ALCANIZ M ET AL: "The Gamma Functional Navigator", IEEE TRANSACTIONS ON NUCLEAR SCIENCE, IEEE SERVICE CENTER, NEW YORK, NY, US, Bd. 51, Nr. 3, 1. Juni 2004 (2004-06-01), Seiten 682-689, XP011115021, ISSN: 0018-9499, DOI: DOI:10.1109/TNS.2004.829597

## Beschreibung

Die Erfindung betrifft eine Infrarotkamera mit einem Messkopf und einem den Messkopf zumindest teilweise aufnehmenden bzw. umfassenden Gehäuse.

An dieser Stelle sei angemerkt, dass mit dem Begriff "Infrarotkamera" jedwede Kameras, Sensoren, Messgeräte, etc. gemeint sind, die das Infrarot-Spektrum nutzen. Solche Kameras, Messgeräte der dgl. sind hinlänglich aus der Praxis bekannt wie z.B. das von M. Alcañiz, "The Gamma navigator", IEEE Trans. on nuclear science, beschriebene Gerät, und werden beispielsweise als Wärmebildkameras eingesetzt.

Bei den aus der Praxis bekannten Infrarotkameras handelt es sich regelmäßig um für sich gesehen handhabbare Einheiten mit eigener Stromversorgung und eigenem Prozessor, wodurch sich ein ganz erhebliches Bauvolumen und Gewicht des Kameragehäuses ergibt. Auch ist es aus der Praxis bereits bekannt, entsprechende Infrarotkameras mittels Kabel mit einem PC zu verbinden. Dennoch handelt es sich bei der bekannten Infrarotkamera um eine unabhängig von dem PC handhabbare Einheit, vor allem um eine Einheit mit eigener Stromversorgung. Entsprechend den voranstehenden Ausführungen bauen die aus der Praxis bekannten Infrarotkameras recht groß, wodurch die Anwendung nicht selten umständlich ist. Insbesondere bei geforderter Beweglichkeit und flexiblem Einsatz sollte die Kamera insgesamt möglichst klein bauen.

Der vorliegenden Erfindung liegt daher die Aufgabe zugrunde, eine Infrarotkamera derart auszugestalten und weiterzubilden, dass sie sich ganz besonders für den flexiblen Einsatz, vor allem unterwegs, eignet.

Die voranstehende Aufgabe ist durch die Merkmale des Patentanspruchs 1 gelöst. Danach ist die gattungsbildende Infrarotkamera gekennzeichnet durch eine dem Gehäuse zugeordnete Schnittstelle zur Verbindung mit einem Computer mittels Kabel, wobei die Stromversorgung des Messkopfes über das Kabel durch den Computer erfolgt.

Erfindungsgemäß ist erkannt worden, dass die Stromversorgung, beispielsweise in Form eines Akkus, einen ganz erheblichen Raum im Gehäuse einer herkömmlichen Infrarotkamera einnimmt. Dieser Raum lässt sich einsparen, wenn eine externe Stromversorgung vorgesehen ist. Würde man das Gehäuse der Infrarotkamera klein bauen und die Stromversorgung extern, über ein Kabel vorsehen, müsste man ein entsprechendes Akkupaket stets dabei haben. Dies würde zwar das Bauvolumen der Infrarotkamera reduzieren, jedoch den Bedarf einer separaten Stromversorgung mit sich bringen. In erfindungsgemäßer Weise wird jedoch die Stromversorgung der Infrarotkamera, d.h. des Messkopfes, über einen kabelverbundenen Computer generiert, der ohnehin zur anspruchsvollen Datenauswertung und Datenablage erforderlich ist. So lässt sich die erfindungsgemäße Infrarotkamera bis auf den Messkopf und die erforderlichen Funktionselemente reduzieren, wobei es möglich ist, die gesamte Steuerung wie auch die erforderliche Software im Computer vorzusehen.

In vorteilhafter Weise handelt es sich bei dem Verbindungskabel zwischen der Infrarotkamera und dem Computer um ein vieradriges Kabel, welches vorzugsweise geschirmt ist. Zwei Adern dienen dabei zur Stromversorgung und zwei Adern zur Datenübertragung. Im Konkreten kann die Schnittstelle als USB-Schnittstelle ausgeführt sein.

Das Gehäuse der Infrarotkamera ist in vorteilhafter Weise derart ausgebildet, dass es mit einer Hand bequem handhabbar ist. In ganz besonders vorteilhafter Weise ist das Gehäuse stabartig, vorzugsweise ähnlich einer Taschenlampe, ausgeführt, wobei das Gehäuse einen länglichen Gehäuseschaft und einen den Messkopf umfassenden Gehäusekopf aufweisen kann.

Am Gehäusekopf könnte mindestens ein zum Einstellen des Messkopfes bzw. zur Fokussierung bzw. zum Scharfstellen der Infrarotsonde dienender Drehring vorgesehen sein, vorzugsweise in Form eines Rändelrings. Beliebige andere Mechanismen zur Einhandbedienung, vorzugsweise zur Bedienung mit einem Finger, sind realisierbar.

Am bzw. im Gehäuse könnte ein Schieber, ein Taster, eine Wippe oder dgl., vorzugsweise zur Bedienung mit einem Finger, vorgesehen sein. So lässt sich die erfindungsgemäße Infrarotkamera komplett mit einer Hand halten und beispielsweise mit dem Daumen und/oder Zeigefinger bedienen. Eine einfachste Handhabung der sehr klein bauenden Kamera ist dadurch gewährleistet.

Im Rahmen einer weiteren Ausgestaltung könnte am bzw. im Gehäuse eine Anzeigeeinrichtung zum Anzeigen des Betriebszustandes oder sonstiger Situationen, vorzugsweise in Form einer oder mehrerer LED-Lichtquellen, vorgesehen sein.

In vorteilhafter Weise ist im Gehäuse der Infrarotkamera ein Speicher vorgesehen, nämlich ein Speicher mit IR-sensorspezifischen Kalibrierdaten. Diese Daten werden gemeinsam mit den AD-gewandelten Messdaten nach deren vorzugsweise serieller Datenübertragung im externen Computer verarbeitet. Der Bildverarbeitungsprozessor ist somit abseits der Infrarotkamera vorgesehen.

Auch ist es denkbar, dass im bzw. am Gehäuse ein Display vorgesehen ist, um gewisse Daten aus der Messung anzuzeigen. Der mit der Infrarotkamera verbundene Computer stellt das eigentliche Display für die Infrarotkamera zur Verfügung. Grundsätzlich lässt sich die Infrarotkamera ohne eigenen Datenspeicher betreiben, nämlich aufgrund der Datenverbindung zwischen der Infrarotkamera und dem Computer. Ebenso ist es jedoch auch denkbar, dass im Gehäuse ein Datenspeicher vorgesehen ist, der Messwerte, Programme und Kalibrierdaten enthält. Bei Nutzung der Kamera sind somit keine separaten Datentransfers erforderlich. Auch kann eine mechanische Aufnahme für einen mobilen Speicher vorgesehen sein, vorzugsweise für eine Speicherkarte. Parallel lassen sich sämtliche gemessenen bzw. verarbeiteten Daten über das Datenkabel an den Computer überspielen.

Wie bereits zuvor erwähnt ist es denkbar, dass die Infrarotkamera über keine interne Stromversorgung verfügt. Jedoch ist es auch möglich, im Gehäuse eine kleine Akkueinheit vorzusehen, die über das Kabel und den Computer aufladbar ist. Im Rahmen einer solchen Ausgestaltung wäre gewährleistet, dass die sehr klein bauende Infrarotkamera zumindest kurzzeitig unabhängig von dem Computer betreibbar bzw. verwendbar ist, je nach der erforderlichen Handhabung. Auch ist es denkbar, das die Infrarotkamera mit dem Computer verbindende Kabel äußerst flexibel und sehr lang auszugestalten, so dass die Kamera fernab des Computers, entsprechend der Länge des Kabels, betrieben werden kann.

In ganz besonders vorteilhafter Weise handelt es sich bei dem Computer um einen Klein- oder Kleinstcomputer. Im Konkreten kann es sich bei dem Computer um ein Notebook, einen ultramobile PC, einen PDA (Personal Digital Assistant), ein mit einem geeigneten Prozessor ausgestattetes Handy, etc. handeln.

Noch einmal sei ganz besonders darauf hingewiesen, dass sich die Infrarotkamera in Bezug auf deren Funktionsteile auf den Messkopf, das Gehäuse, ein Mindestmaß an Bedienelement und die USB-Schnittstelle reduzieren lässt, da die erfindungsgemäße Infrarotkamera den Computer und dessen Funktionseinheiten, insbesondere dessen Stromversorgung, vollumfänglich nutzen kann. Folglich lässt sich im Lichte der Erfindung eine preiswerte Infrarotkamera realisieren, die obendrein kleinstmöglich baut.

Der Computer umfasst in weiter vorteilhafter Weise mindestens ein Programm, vorzugsweise eine Programmbibliothek, die zum Betreiben der Infrarotkamera dient. Ebenso kann der Computer eine Datei, vorzugsweise zum Ablegen und/oder Bereitstellen von Daten, insbesondere zum Betrieb der Infrarotkamera, umfassen.

Gemäß den voranstehenden Ausführungen lässt sich die Infrarotkamera mit geringst möglichem konstruktivem Aufwand realisieren. Alternativ dazu ist es jedoch auch denkbar, dass im Gehäusekopf, neben dem eigentlichen Messkopf, eine Lichtquelle, vorzugsweise eine Laserlichtquelle, vorgesehen ist. Auch ist es denkbar, dass im Gehäusekopf neben dem eigentlichen Messkopf eine als Zieleinrichtung dienende Lichtquelle, vorzugsweise ein Ziellaser, vorgesehen ist. Grundsätzlich kann im Gehäusekopf neben dem eigentlichen Messkopf mindestens ein weiterer Sensor vorgesehen sein, der nach beliebigen physikalischen Prinzipien arbeiten kann. So lässt sich die Infrarotkamera entsprechend dem konkreten Bedarf mit zusätzlicher Sensorik ausstatten. Auch ist es denkbar, dass im Gehäusekopf neben dem eigentlichen Messkopf eine weitere Kamera, nämlich eine Kamera für den sichtbaren Bereich, vorzugsweise eine Web-Cam, oder dgl., vorgesehen ist.

Im Lichte der voranstehenden Ausführungen wird deutlich, dass sich die erfindungsgemäße Infrarotkamera im Sinne einer Web-Cam betreiben lässt, nämlich im Sinne einer Web-Kamera für den Infrarotbereich. Der mobile Computer dient zur Stromversorgung, Steuerung und Überwachung der Kamera bzw. des Betriebs der Kamera. Die Infrarotkamera ist somit im Sinne einer Sonde bzw. Messsonde reduziert und ist nichts anders als eine Art Infrarot-Bildfühler zur Einhandbedienung bei kleinstmöglicher Bauweise.

Das Kabel, welches die erfindungsgemäße Infrarotkamera mit dem möglichst klein bauenden Computer verbindet, dient einerseits zur Stromversorgung und andererseits zur Datenübertragung. Gleichermaßen kann die Stromversorgung zum Betrieb eines integrierten Choppermotors, einer zusätzlichen Kamera für den sichtbaren Spektralbereich, zum Betrieb eines SD-Kartenspeichers, einer Laserlichtquelle, etc. dienen. Eine sequenzielle Nutzung zusätzlicher elektrischer Verbraucher könnte von Vorteil sein, insbesondere um den maximalen Stromverbrauch zu begrenzen, beispielsweise auf 0,5 Ampere.

Des Weiteren bietet die erfindungsgemäße Lehre den enormen Vorteil, dass sich an ein und dem gleichen mobilen Computer unterschiedliche Infrarotkameras mit unterschiedlicher Grundausstattung anschließen lassen. Das Programm bzw. die individuelle Anpassung des Programms entscheidet, welche konkrete Infrarotkamera betrieben werden kann. Beliebige Initialisierungen und Voreinstellungen sind realisierbar.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in schematischer Darstellung den prinzipiellen Aufbau einer erfindungsgemäßen Infrarotkamera, wobei diese über deren Schnittstelle mittels Kabel an einen Computer angeschlossen ist, nämlich einerseits zur Energieversorgung und andererseits zur Steuerung und Datenübertragung und
- Fig. 2: ein Blockschaltbild einer erfindungsgemäßen Infrarotkamera mit internen USB-Verbindungen.

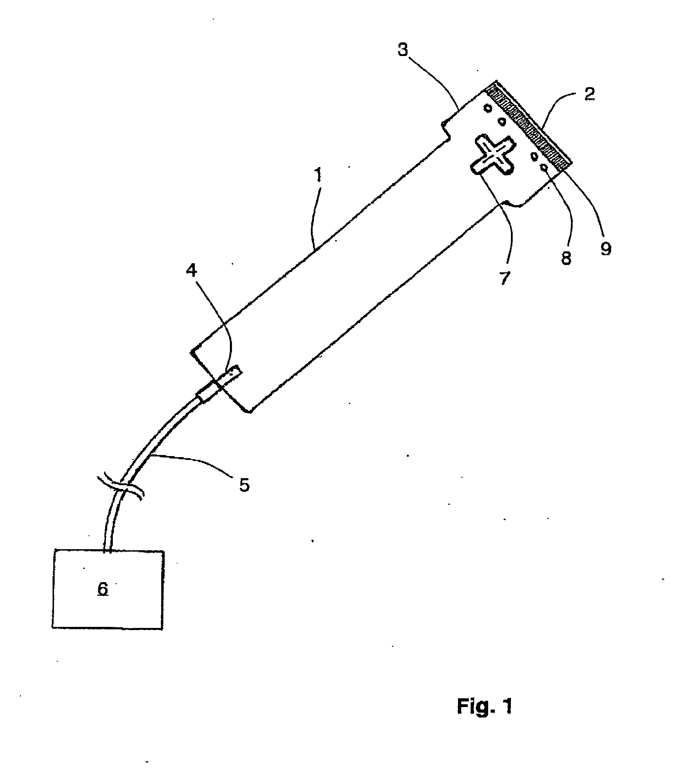

Fig. 1 zeigt ein Ausführungsbeispiel einer erfindungsgemäßen Infrarotkamera in schematischer Ansicht, wobei die Infrarotkamera ein Gehäuse 1 und einen im Gehäuse 1 angeordneten Messkopf 2 umfasst. Das Gehäuse 1 ist stabartig Ausgestaltet und hat einen Gehäusekopf 3, in dem der Messkopf 2 angeordnet ist.

Über eine USB-Schnittstelle 4 verbindet ein vieradriges Kabel 5 die Infrarotkamera mit einem mobilen Computer 6, wobei es sich dabei im Konkreten um einen PDA handelt.

An bzw. in dem Gehäuse 1 sind Bedienelemente 7 und LED-Anzeigen 8 vorgesehen. Außerdem umfasst der Gehäusekopf 3 einen Einstellring 9 zum Einstellen des Messkopfes 2.

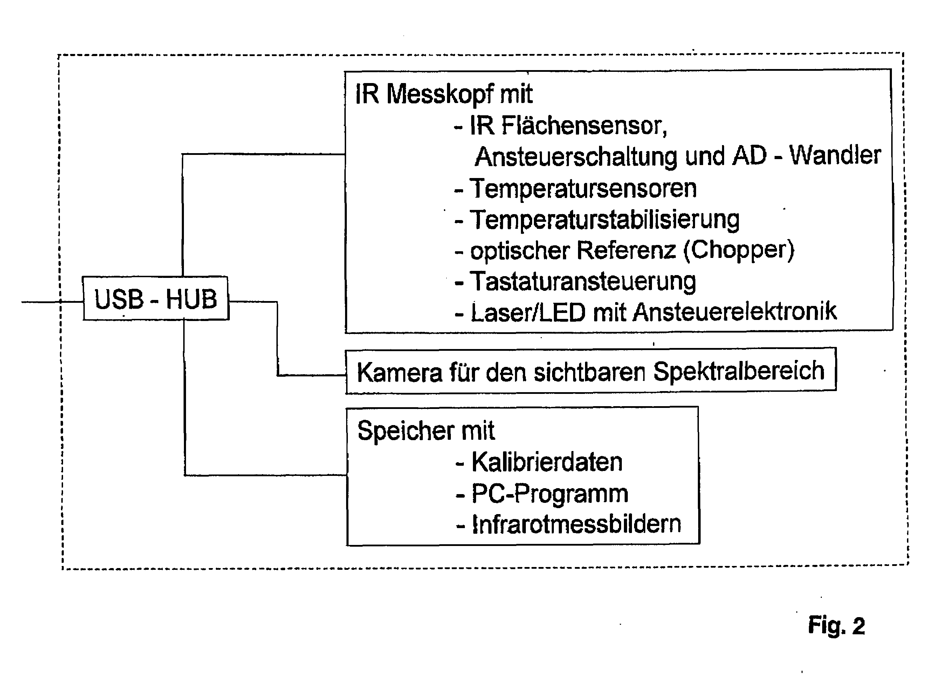

Fig. 2 zeigt - schematisch - ein Blockschaltbild einer erfindungsgemäßen Infrarotkamera mit internen USB-Verbindungen. Im IR-Messkopf sind unterschiedliche funktionale Einheiten vorgesehen, nämlich der eigentliche IR-Flächensensor mit Ansteuerschaltung und AD-Wandler, zusätzliche Temperatursensoren, eine Temperaturstabilisierung, eine optische Referenz (Chopper), eine Tastaturansteuerung, ein Laser/LED mit Ansteuerelektronik, etc. Außerdem kann eine Kamera für den sichtbaren Spektralbereich vorgesehen sein. In Bezug auf den Speicher ist angedeutet, dass dieser Kalibrierdaten umfasst. Ebenso kann er ein PC-Programm sowie Infrarotmessbilder umfassen.

Hinsichtlich weiterer Ausgestaltungen, die sich den Figuren nicht entnehmen lassen, sei zur Vermeidung von Wiederholungen auf den allgemeinen Teil der Beschreibung verwiesen.

Schließlich sei ausdrücklich darauf hingewiesen, dass das voranstehend beschriebene Ausführungsbeispiel lediglich zur Erörterung der beanspruchten Lehre dient, diese jedoch nicht auf das Ausführungsbeispiel einschränkt.

## Patentansprüche

1. Infrarotkamera mit einem IR-Messkopf (2) und einem den IR-Messkopf (2) zumindest teilweise aufnehmenden bzw. umfassenden Gehäuse (1), wobei das Gehäuse (1) derart ausgebildet ist, dass es mit einer Hand bequem handhabbar ist, wobei dem Gehäuse (1) eine als USB-Schnittstelle ausgeführte Schnittstelle (4) zur Verbindung mit einem Computer (6) mittels Kabel (5) zugeordnet ist und wobei die Stromversorgung des IR-Messkopfes (2) über das Kabel (5) durch den Computer (6) erfolgt,
**dadurch gekennzeichnet, dass** im Gehäusekopf (3) neben dem eigentlichen IR-Messkopf (2) eine Kamera für den sichtbaren Bereich vorgesehen ist.

2. Infrarotkamera nach Anspruch 1, **dadurch gekennzeichnet, dass** das Kabel (5) vieradrig, vorzugsweise geschirmt, ausgeführt ist, wobei zwei Adern zur Stromversorgung und zwei Adern zur Datenübertragung dienen.

3. Infrarotkamera nach Anspruch 1 oder 2, **dadurch gekennzeichnet, dass** das Gehäuse (1) stabartig, vorzugsweise ähnlich einer Taschenlampe, ausgeführt ist.

4. Infrarotkamera nach einem der Ansprüche 1 bis 3, **dadurch gekennzeichnet, dass** das Gehäuse (1) einen länglichen Gehäuseschaft und einen den IR-Messkopf (2) umfassenden Gehäusekopf (3) aufweist, wobei
am Gehäusekopf (3) mindestens ein zum Einstellen des IR-Messkopfes (2) dienender Drehring, vorzugsweise in Form eines Rändelrings, vorgesehen sein kann.

5. Infrarotkamera nach einem der Ansprüche 1 bis 4, **dadurch gekennzeichnet, dass** am/im Gehäuse (1) ein Schieber, ein Taster, eine Wippe oder dgl., vorzugsweise zur Bedienung mit einem Finger, und/oder
eine Anzeigeeinrichtung (8) zum Anzeigen des Betriebszustandes oder sonstiger Situationen, vorzugsweise in Form einer oder mehrerer LED-Lichtquelle(n), vorgesehen sein kann.

6. Infrarotkamera nach einem der Ansprüche 1 bis 5, **dadurch gekennzeichnet, dass** im Gehäuse (1) ein Speicher mit IR-sensorspezifischen Kalibrierdaten vorgesehen ist, die gemeinsam mit den AD-gewandelten Messdaten nach deren serieller Datenübertragung im externen Computer verarbeitet werden und/oder
dass im Gehäuse (1) ein Display vorgesehen ist und/oder
dass im Gehäuse (1) ein Datenspeicher vorgesehen ist, wobei
im Gehäuse (1) eine Aufnahme für einen mobilen Speicher, vorzugsweise für eine Speicherkarte, vorgesehen sein kann.

7. Infrarotkamera nach einem der Ansprüche 1 bis 6, **dadurch gekennzeichnet, dass** im Gehäuse (1) eine Akkueinheit vorgesehen ist, die über das Kabel und den Computer (6) aufladbar ist.

8. Infrarotkamera nach einem der Ansprüche 1 bis 7, **dadurch gekennzeichnet, dass** der Computer (6) als Klein- oder Kleinstcomputer ausgeführt ist.

9. Infrarotkamera nach Anspruch 8, **dadurch gekennzeichnet, dass** es sich bei dem Computer (6) um ein Notebook, einen ultramobilen PC, sein PDA (Personal Digital Assistant), ein mit geeignetem Prozessor ausgestattetes Handy, etc. handelt.

10. Infrarotkamera nach einem der Ansprüche 1 bis 9, **dadurch gekennzeichnet, dass** der Computer (6) mindestens ein Programm, vorzugsweise eine Programmbibliothek, zum Betreiben der Infrarotkamera und ggf. eine Datei, vorzugsweise zum Ablegen und Bereitstellen von Daten, umfasst.

11. Infrarotkamera nach einem der Ansprüche 1 bis 10, **dadurch gekennzeichnet, dass** im Gehäusekopf (3) neben dem eigentlichen IR-Messkopf (2) eine Lichtquelle, vorzugsweise eine Laserlichtquelle, vorgesehen ist.

12. Infrarotkamera nach einem der Ansprüche 1 bis 11, **dadurch gekennzeichnet, dass** im Gehäusekopf (3) neben dem eigentlichen IR-Messkopf (2) eine als Zieleinrichtung dienende Lichtquelle, vorzugsweise ein Ziellaser, vorgesehen ist.

13. Infrarotkamera nach einem der Ansprüche 1 bis 12, **dadurch gekennzeichnet, dass** im Gehäusekopf (3) neben dem eigentlichen IR-Messkopf (2) mindestens ein weiterer Sensor vorgesehen ist.

14. Infrarotkamera nach einem der Ansprüche 1 bis 13, **dadurch gekennzeichnet, dass** die Kamera für den sichtbaren Bereich eine Web-Cam ist.

## Claims

1. Infrared camera with an IR measuring head (2) and a housing (1) at least partially incorporating or containing the IR measuring head (2), the housing (1) being formed in such a manner that it is conveniently manageable with a hand, the housing (1) being provided with an interface (4) formed as a USB interface for connection with a computer (6) by a cable (5) and the power supply of the IR measuring head (2) taking place over the cable (5) through the computer (6), **characterised in that** a camera for the visible area is provided in the housing head (3) next to the actual IR measuring head (2).

2. Infrared camera according to claim 1, **characterised in that** the cable (5) is in four-wire form, preferably in shielded form, two wires being used for power supply and two wires being used for data communication.

3. Infrared camera according to claim 1 or 2, **characterised in that** the housing (1) is in rod form, preferably similar to a torch.

4. Infrared camera according to one of claims 1 to 3, **characterised in that** the housing (1) has a longitudinal housing shaft and a housing head (3) containing the IR measuring head (2),
it being possible for at least one swivel which serves to adjust the IR measuring head (2) and is preferably in the form of a knurled ring to be provided on the housing head (3).

5. Infrared camera according to one of claims 1 to 4, **characterised in that** a slide, a button, a rocker or the like, preferably operated using a finger, and/or
a display device (8) for displaying the operational status or other situations, preferably in the form of one or more LED light sources, may be provided on/in the housing (1).

6. infrared camera according to one of claims 1 to 5, **characterised in that** a memory with IR sensor-specific calibration data, which are processed in the external computer together with the AD-converted measurement data following their serial data communication, is provided in the housing (1) and/or
that a display is provided in the housing (1) and/or
that a data memory is provided in the housing (1),
it being possible for an intake for a mobile memory, preferably for a memory card, to be provided in the housing (1).

7. infrared camera according to one of claims 1 to 6, **characterised in that** a battery unit which may be charged via the cable and the computer (6) is provided in the housing (1).

8. Infrared camera according to one of claims 1 to 7, **characterised in that** the computer (6) is formed as a mini- or microcomputer.

9. Infrared camera according to claim 8, **characterised in that** the computer (6) is a notebook, an ultra-mobile PC, a PDA (Personal Digital Assistant), a mobile fitted with a suitable processor, etc.

10. Infrared camera according to one of claims 1 to 9, **characterised in that** the computer (6) contains at least one program, preferably a program library, for operating the infrared camera and, if applicable, a file, preferably for depositing and providing data.

11. Infrared camera according to one of claims 1 to 10, **characterised in that** a light source, preferably a laser light source, is provided in the housing head (3) next to the actual IR measuring head (2).

12. Infrared camera according to one of claims 1 to 11, **characterised in that** a light source serving as a targeting device, preferably a targeting laser, is provided in the housing head (3) next to the actual IR measuring head (2).

13. Infrared camera according to one of claims 1 to 12, **characterised in that** at least one further sensor is provided in the housing head (3) next to the actual IR measuring head (2).

14. Infrared camera according to one of claims 1 to 13, **characterised in that** the camera for the visible area is a webcam.

## Revendications

1. Caméra infrarouge comprenant une tête de mesure IR (2) et un logement (1) contenant ou entourant au moins partiellement la tête de mesure IR (2), étant entendu que le logement (1) est conçu de telle sorte qu'il peut être manipulé confortablement avec une seule main, étant entendu qu'une interface (4) réalisée comme interface USB, destinée à la connexion avec un ordinateur (6) au moyen d'un câble (5), est adjointe au logement (1) et étant entendu que l'alimentation électrique de la tête de mesure IR (2) s'effectue via le câble (5) par le biais de l'ordinateur (6), **caractérisée en ce qu'**il est prévu dans la tête du logement (3), outre la tête de mesure IR (2) proprement dite, une caméra pour le domaine visible.

2. Caméra infrarouge selon la revendication 1, **caractérisée en ce que** le câble (5) est réalisé avec quatre conducteurs, de préférence avec un blindage, étant entendu que deux conducteurs servent à l'alimentation électrique et deux conducteurs servent à la transmission de données.

3. Caméra infrarouge selon la revendication 1 ou 2, **caractérisée en ce que** le logement (1) est réalisé à la manière d'une barre, de préférence de façon similaire à une lampe de poche.

4. Caméra infrarouge selon l'une des revendications 1 à 3, **caractérisée en ce que** le logement (1) présente une hampe de logement allongée et une tête de logement (3) entourant la tête de mesure IR (2),
étant entendu qu'il peut être prévu sur la tête du logement (3) au moins une bague rotative servant à régler la tête de mesure IR (2), de préférence sous la forme d'une bague à molette.

5. Caméra infrarouge selon l'une des revendications 1 à 4, **caractérisée en ce qu'**il peut être prévu sur/dans le logement (1) un curseur, un bouton, une bascule ou un élément similaire, pouvant de préférence être utilisé avec un seul doigt, et/ou
un dispositif d'affichage (8) destiné à afficher l'état de fonctionnement ou d'autres situations, de préférence sous la forme d'une ou plusieurs sources lumineuses à DEL.

6. Caméra infrarouge selon l'une des revendications 1 à 5, **caractérisée en ce qu'**il est prévu dans le logement (1) une mémoire comprenant des données de calibrage spécifiques au capteur IR qui sont traitées conjointement avec les données de mesure converties A/D après leur transmission de données en série dans un ordinateur extérieur, et/ou
**en ce qu'**il est prévu dans le logement (1) un écran, et/ou
**en ce qu'**il est prévu dans le logement (1) une mémoire de données, étant entendu qu'il peut être prévu dans le logement (1) un emplacement pour une mémoire mobile, de préférence pour une carte à mémoire.

7. Caméra infrarouge selon l'une des revendications 1 à 6, **caractérisée en ce qu'**il est prévu dans le logement (1) une unité de batterie qui peut être chargée par le biais du câble et de l'ordinateur (6).

8. Caméra infrarouge selon l'une des revendications 1 à 7, **caractérisée en ce que** l'ordinateur (6) est réalisé comme mini-ordinateur ou micro-ordinateur.

9. Caméra infrarouge selon la revendication 8, **caractérisée en ce que** l'ordinateur (6) est un notebook, un PC ultramobile, un PDA (Personal Digital Assistant), un téléphone portable équipé d'un processeur approprié, etc.

10. Caméra infrarouge selon l'une des revendications 1 à 9, **caractérisée en ce que** l'ordinateur (6) comprend au moins un programme, de préférence une bibliothèque de programmes, aux fins de l'utilisation de la caméra infrarouge, et le cas échéant, un fichier, de préférence aux fins du stockage et de la mise à disposition de données.

11. Caméra infrarouge selon l'une des revendications 1 à 10, **caractérisée en ce qu'**il est prévu dans la tête du logement (3), outre la tête de mesure IR (2) proprement dite, une source lumineuse, de préférence une source lumineuse laser.

12. Caméra infrarouge selon l'une des revendications 1 à 11, **caractérisée en ce qu'**il est prévu dans la tête du logement (3), outre la tête de mesure IR (2) proprement dite, une source lumineuse faisant fonction de dispositif de visée, de préférence un laser de visée.

13. Caméra infrarouge selon l'une des revendications 1 à 12, **caractérisée en ce qu'**il est prévu dans la tête du logement (3), outre la tête de mesure IR (2) proprement dite, au moins un autre capteur.

14. Caméra infrarouge selon l'une des revendications 1 à 13, **caractérisée en ce que** la caméra pour le domaine visible est une webcam.
